# EUROPÄISCHE PATENTSCHRIFT

(11) **EP 0 342 359 B1**
(45) Veröffentlichungstag und Bekanntmachung des Hinweises auf die Patenterteilung: **10.11.1993**
(21) Anmeldenummer: 89106702.7
(22) Anmeldetag: 14.04.1989
(51) Int. Cl.: G11B 23/50

(54) **Verfahren und Vorrichtung zum Reparieren von beschädigten digitalen Aufzeichnungsplatten**
Process and device to repair damaged digital recording disks
Procédé et appareil de remise en état de disques d'enregistrement digital endommagés

(30) Priorität: 14.05.1988 DE 3816561
(43) Veröffentlichungstag der Anmeldung: 23.11.1989
(73) Patentinhaber: Schmid, Harald, D-74379 Ingersheim (DE)
(72) Erfinder: Schmid, Harald, D-74379 Ingersheim (DE)
(74) Vertreter: Witte, Alexander, Dr.-Ing.

(56) Entgegenhaltungen:
- DE-A- 2 026 805
- PATENT ABSTRACTS OF JAPAN vol. 8, no. 245 (P-312)(1682) 10 November 1984, & JP-A-59 117735
- IBM Technical Disclosure Bulletin vol. 24, no. 2, Juli 1981, Armonk USA Seiten 993 - 994; J.J. Hagopian: "Rotary burnish head and system"
- PATENT ABSTRACTS OF JAPAN vol. 8, no. 191 (M-322)(1628) 4 September 1984, & JP-A-59 081058

## Beschreibung

Die Erfindung betrifft ein Verfahren und eine Vorrichtung zum Reparieren von beschädigten transparenten Kunstoffträgerschichten digitaler Aufzeichnungsplatten, wie Schall- oder Bildaufzeichnungsplatten, die einen mittigen Auflagebereich zum Halten und Führen der Platte und eine Informationsträgerschicht mit zumindest einer Informationsspur aufweisen.

Digital codierte Platten haben eine verbreitete Anwendung als Informationsträger gefunden. Digitale Schallaufzeichnungsplatten, sogenannte Compact Discs, stellen Tonträger dar, die eine bislang nicht erreichbare Tonwiedergabequalität ermöglichen. Digitale Bildaufzeichnungsplatten, sogenannte Video-Compact Discs liefern auch nach zahlreichen Abspielvorgängen noch ein störfreies Bild.

Gebräuchliche Compact Discs haben eine ca. 1,2 mm starke Trägerschicht aus Kunststoff mit ca. 12 cm Durchmesser. Auf einer Seite wird die digitale Information in Form von kleinen Pits eingeprägt. Danach wird diese Seite mit einer Metallisierungsschicht versehen und mit einem Schutzlack versiegelt. Die Pits werden beispielsweise bei einer Compact Disc, ähnlich wie bei einer herkömmlichen Rillenschallplatte in einer durchgehenden, spiralförmigen Informationsspur eingeprägt. Bei Video-Compact Discs wird die Information in konzentrischen Kreisbahnen eingeprägt.

Die Platten weisen meist eine mittige Öffnung auf, die zum Zentrieren in einem Abspielgerät dient. Um die mittige Öffnung ist ein ringscheibenförmiger beidseitiger Auflagebereich vorgesehen, der keine Informationen trägt und als Angriffsfläche für Halte- und Antreibmittel des Abspielgerätes dient.

Beim Lesevorgang tastet ein Laserstrahl die der Prägeseite gegenüberliegende Seite der Aufzeichnungsplatte ab, d.h., er dringt durch die etwa 1,2 mm starke Kunststoffschicht, wird von der Metallisierungsschicht reflektiert, durchläuft erneut die Kunststoffschicht und tritt dann wieder aus der Platte aus.

Es wurde festgestellt, daß Beschädigungen, wie beispielsweise Kratzer, in der Kunststoffschicht das Arbeitsverhalten der Platte dahingehend beeinträchtigen, daß deutlich hörbare Klickgeräusche oder Aussetzer festzustellen sind. Bei extrem starken Beschädigungen ist die Platte nicht mehr abspielbar, d.h. sie wird von Geräten nicht mehr angenommen. Zwar besitzen Abspielgeräte für digital codierte Platten, z.B. Compact Disc-Abspielgeräte (CD-Player) eine Fehlerkorrektur, die Störungen in der Datenübermittlung bis zu einem gewissen Grad ausgleichen kann, die jedoch nach Überschreiten einer gewissen Toleranzgrenze nicht mehr unterdrückt werden können.

Bereits kleine Kratzer, die bei unsachgemäßem Handhaben der codierten Platten entstehen können, können zu Störungen führen. Der Lesestrahl weist gebräuchlicherweise einen Strahldurchmesser von etwa 1,6 µm auf, der zum Lesen der etwa 0.6µ breiten Informationsspur dient. Ist die Kunststoffschicht durch Beschädigungen, beispielsweise in Form von Kratzern beeinträchtigt, so ist es möglich, daß der Lesestrahl durch Reflexionen an den etwa V-förmigen Einschnittseitenwänden der Kratzer derart abgelenkt wird, daß er nicht mehr die Informationsspur trifft. Es sind zwar üblicherweise zum Lesen zusätzlich zum Lesestrahl zumindest zwei weitere Strahlen vorgesehen, die beidseitig des Lesestrahls verlaufen, wobei einer diesem vorläuft und einer diesem nachgeht. Die beiden seitlichen Führungsstrahlen laufen dabei jeweils zwischen zwei benachbarten Informationsspuren und schließen die mittige Informationsspur, die der Lesestrahl abtasten soll, ein.

Beschädigungen, die sich in Richtung der Informationsspur ausbreiten, können schon bei geringen Ausmaßen dazu führen, daß der Lesestrahl samt seinen Führungsstrahlen in eine benachbarte Informationsspur abgelenkt wird, so daß je nach Ablenkrichtung eine bereits gelesene Informationsspur nochmals abgelesen wird oder eine Spur übersprungen und bereits in die nächste übergegangen wird. In einem solchen Fall können auch hochentwickelte Fehlerkorrekturen, die beispielsweise mit vier Laser-Leitstrahlen arbeiten, eine wahrnehmbare Störung nicht verhindern.

AUS JP-A-59117735 ist ein Verfahren zum Reparieren von beschädigten magnetischen Aufzeichnungsplatten bekannt, wobei eine Ersatzschicht in Form eines Bandes über die beschädigte Lesefläche abgerollt wird. Ein Abtragen der Lesefläche ist nicht vorgesehen.

IBM TDB Vol. 24 No 2 zeigt ein Abtragungsverfahren, durch das während der Herstellung einer magnetischen Platte Vorsprünge und Erhebungen von der Lesefläche dieser Platte abgelöst werden.

Aufgabe der vorliegenden Erfindung ist es, ein Verfahren und eine Vorrichtung der eingangs genannten Art zu schaffen, wodurch beschädigte digitale Aufzeichnungsplatten einfach und unter Beibehaltung ihrer mechanischen Laufeigenschaften repariert werden können.

Erfindungsgemäß wird die Aufgabe beim Verfahren dadurch gelöst, daß die Oberfläche der Trägerschicht in einer die Informationsspur schneidenden Arbeitsrichtung so weit abgetragen wird, daß keine Störungen beim Ablesevorgang mehr auftreten.

Erfindungsgemäß wird die Aufgabe bei einer Vorrichtung dadurch gelöst, daß eine Haltevorrichtung zur Aufnahme und zum Kalten der zu reparierenden Platte und eine Schleifvorrichtung vorgesehen ist, die auf die zu bearbeitende Oberfläche der Trägerschicht aufbringbar und in einer die Informationsspur schneidenden Arbeitsrichtung hin- und herbewegbar ist.

Durch Abtragen von Material der Trägerschicht werden die durch Beschädigungen verursachten Einschnitte oder Kratzer beseitigt. Beim Abtragen des Kunstoffsmaterials entstehen zwangsläufig je nach Art und Weise des Abtragens, beispielsweise durch Abschleifen, Bearbeitungsspuren, die eine endliche Größe aufweisen, d.h. das Oberflächenbild beeinflussen. Durch die jetzt vorgeschlagene Maßnahme, nämlich den Materialabtrag in einer solchen Richtung durchzuführen, daß die dadurch entstehenden Bearbeitungsspuren die Informationsspur schneiden, wobei dies vorzugsweise quer zu dieser erfolgt, entstehen, in Längsrichtung einer Informationsspur gesehen, im Abstand angeordnete Oberflächenstörungen, die ab einer bestimmten Größe den Lesestrahl nicht mehr beeinflussen, oder so gering sind, daß sie durch die vorhandene Fehlerkorrektur unterdrückt werden. Dabei können wesentlich gröbere Bearbeitungsspuren verbleiben, als dies bei einer Bearbeitung in Richtung der Informationsspur möglich wäre. Bei einem Pit mit einer Breite von 0.6 µm und mit einer Länge von beispielsweise 5 µm würde eine in Längsrichtung verlaufende 3 µm breite Bearbeitungsspur den Pit vollständig abdecken und dadurch möglicherweise unlesbar machen. Durch die querverlaufende Bearbeitungsrichtung ist jedenfalls so viel vom 5 µm-Pit unbeeinflußt, daß in jedem Fall, möglicherweise sogar ohne Fehlerkorrektur das Pit abgetastet und erfaßt werden kann.

In einer vorteilhaften Ausgestaltung der Erfindung wird die Oberfläche der Trägerschicht lediglich zwischen Auflagebereich und Plattenumfangskante abgetragen.

Dadurch, daß ein Materialabtrag nur im Abschnitt zwischen dem mittigen Auflagebereich und der umfänglichen Plattenkante durchgeführt wird, bleibt die ursprüngliche Stärke der Platte in dem Bereich, in dem sie in den Abspielgeräten gehalten und geführt wird, unverändert. Das bedeutet, daß die Aufzeichnungsplatte nach einem materialabtragenden Arbeitsvorgang weiterhin spielfrei in den Abspielvorrichtungen gehalten ist, d.h., daß kein Flattern oder Schlingern stattfindet, wie dies bei einem Materialabtrag über die gesamte Fläche der Aufzeichnungsplatte der Fall wäre. Diese Vorgehensweise wird dann angewandt, falls mehr Material abgetragen werden soll, als dies der Toleranzgrenze der Abspielvorrichtung (meist etwa 0,2 mm senkrecht zur Ebene der Aufzeichnungsplatte) zum sicheren Ergreifen und Halten der Aufzeichnungsplatte entspricht. Bei Abtragungen bis 0,2 mm der Stärke der Trägerschicht kann, beispielsweise mit einem Bandschleifer über die gesamte Fläche der Schicht, also auch im Auflagebereich Material abgetragen werden, da innerhalb dieser Toleranzgrenzen die Aufzeichnungsplatte gleichermaßen gut ergriffen wird.

In einer Ausgestaltung der Erfindung bei spiralförmiger oder kreisförmigen Informationsspur (en) wird in radialer Richtung der Platte abgetragen.

Diese Maßnahme hat den Vorteil, daß die Informationsspur in etwa in einem Winkel von 90° geschnitten wird, d.h. die Pits werden auf dem kurzmöglichsten Weg überschnitten. Dadurch ist auch bei relativ tiefen Bearbeitungsspuren sichergestellt, daß dadurch keine Störsignale resultieren.

In einer weiteren Ausgestaltung der Erfindung verläuft die Arbeitsrichtung längs gegeneinander winkelversetzter Sekanten der Platte, die unter einem Winkel α, vorzugsweise unter 45° zueinander verlaufen.

Diese Maßnahme hat den Vorteil, daß ein "Kreuzschliff" durch die materialabhebende Bearbeitung entsteht, der zu einem besonders ebenen Oberflächenbild führt. Dadurch ist ein besonders gleichmäßiger Materialabtrag über einen großen Bereich ermöglicht.

In einer weiteren Ausgestaltung der Erfindung wird das Abtragen durch mehrere Schleifvorgänge mit immer feinkörnigerem Schleifmittel durchgeführt und zwar derart, daß abschließend etwa eine Oberflächengüte einer neuen Platte erreicht wird.

Diese Maßnahme hat den Vorteil, daß ein glattes Oberflächenbild erreicht wird, das wesentlich unterhalb der Toleranzgrenze der Störunterdrückung liegt. Dadurch ist es möglich, daß nach einem Reparaturvorgang erneut erfolgende Beschädigungen, sofern sie sich in der Toleranzgrenze der Fehlerunterdrückung befinden, nicht unmittelbar zu Störsignalen führen, wie dies der Fall wäre, wenn ein insgesamt so rauhes Oberflächenbild nach einem Reparaturvorgang erhalten wird, das gerade unterhalb der Toleranzgrenze der Fehlerunterdrückung liegt.

In einer weiteren Ausgestaltung der Erfindung wird eine flüssigkeithaltige, vorzugsweise wasserhaltige Schleifpaste eingesetzt.

Dies hat den Vorteil, daß insbesondere in den feinkörnigen Endbearbeitungsvorgängen eine die Reibungswärme gleichmäßig aufnehmende Paste zur Verfügung steht.

In einer weiteren Ausgestaltung der Erfindung werden beim Abtragen des Kunststoffs solche Arbeitsbedingungen eingehalten, daß die Temperatur der Platte unterhalb der Erweichungstemperatur des Kunststoffes gehalten wird.

Diese Maßnahme hat den Vorteil, daß die Trägerschicht lediglich mechanisch abgetragen wird, ohne daß physikalische oder chemische Änderungen im Kunststoffmaterial auftreten können. Eine lokale Überhitzung bei Schleifvorgängen könnte zu einer Erweichung bis in solchen Schichten führen, in die die Pits eingeprägt sind, was dazu führen würde, daß diese ihre Form verändern und dadurch ein Fehlsignal erzeugen.

In einer Ausgestaltung der erfindungsgemäßen Vorrichtung weist die Haltevorrichtung einen Halteteller auf, dessen Durchmesser gleich oder geringfügig kleiner als der der Platte ist.

Diese Maßnahme hat den Vorteil, daß die zu bearbeitende Platte äußerst sicher und raumsparend gehalten ist, wodurch die bearbeitende Platte einfach nach einem Bearbeitungsvorgang, beispielsweise mittels einer Lupe inspiziert werden kann. Die Haltevorrichtung kann beispielsweise von der Gesamtvorrichtung abnehmbar oder als einzelnes Bauteil, das beim Bearbeiten in der Hand gehalten werden kann, ausgebildet sein, so daß nach einem kurzen Bearbeitungsvorgang die Platte sofort und einfach untersucht werden kann.

In einer weiteren Ausgestaltung weist der Halteteller einen von der Tellerfläche abstehenden Spanndorn auf, auf den eine eine mittige Öffnung aufweisende Platte im Paßsitz aufschiebbar ist.

Diese Maßnahme hat den Vorteil, daß eine solche Platte lediglich auf den Spanndorn aufgeschoben werden muß, von dem sie durch Abziehen einfach wieder abgenommen werden kann.

Der Spanndorn kann auch so ausgebildet sein, daß die Scheibe unter Überwindung eines gewissen Reibungswiderstandes aufgeschoben bzw. abgenommen werden kann. Ferner können Rastmittel vorgesehen sein, in die die Platte durch Aufdrücken einrastet bzw. beim Abziehen wieder ausrastet.

In einer weiteren Ausgestaltung der Erfindung ist der Halteteller um die Tellerachse drehbar und in jeder Winkelstellung arretierbar.

Diese Maßnahme hat den Vorteil, daß die Scheibe in jede beliebige Winkelstellung gebracht werden kann und dann nach Arretierung dort für einen Verarbeitungsvorgang verbleibt.

In einer weiteren Ausgestaltung ist der Halteteller mit einem fusselfreien Tuch, vorzugsweise aus reiner Baumwolle überzogen.

Diese Maßnahme hat den Vorteil, daß die auf dem Halteteller aufliegende Seite der Platte in einem glatten, nachgiebigen Material eingebettet ist, so daß diese Seite, die nur mit einer relativ dünnen Schutzschicht versehen ist, bei einem Bearbeitungsvorgang, bei dem auf die gegenüberliegende Seite relativ starke Druckkräfte ausgeübt werden, nicht durch die als Widerlager dienende Haltetellerfläche störend beeinflußt oder beschädigt wird.

In einer weiteren Ausgestaltung der Erfindung weist die Schleifvorrichtung einen rotierend angetriebenen Schleifteller auf, der senkrecht zum Halteteller steht, dessen Schleiftellerfläche parallel zur linearen Arbeitsrichtung verläuft und dessen Mantelfläche beim Materialabtragen arbeitet.

Diese Maßnahme hat den Vorteil, daß gebräuchliche Schleifteller verwendet werden können, die beispielsweise in Bohrmaschinen oder sonstige Antriebe eingesetzt werden können. Verschiedene Schleifteller können dann für verschiedene Bearbeitungsabschnitte rasch in die Vorrichtung eingesetzt bzw. von dieser abgenommen werden. In Kombination mit einem in der Hand haltbaren Halteteller kann die gesamte Vorrichtung zum Reparieren als Vorsatzbausatz für Heimwerkerbohrmaschinen ausgebildet sein, so daß eine besonders einfache und leicht handhabbare Vorrichtung geschaffen wird.

In einer weiteren Ausgestaltung der Erfindung ist der Schleifteller mit einem fusselfreien Poliertuch, vorzugsweise aus reiner Baumwolle, überzogen.

Diese Maßnahme hat den Vorteil, daß ein besonders abriebfester und feiner Träger für eine Schleifmittelpaste geschaffen ist, der selbst keine Gefahr von Beschädigungen an der zu bearbeitenden Fläche in sich birgt.

In einer vorteilhaften Ausgestaltung der Erfindung ist die Schleifvorrichtung als Bandschleifer ausgebildet.

Diese Maßnahme hat den Vorteil, daß bei Abtragungen innerhalb solcher Toleranzgrenzen (beispielsweise 0,2 mm), die dem sicheren und festen Halten der Aufzeichnungsplatte im Auflagebereich nicht entgegenstehen, diese Abtragungen einfach und rasch gleichzeitig über einen Durchmesserbereich durchgeführt werden können.

In einer weiteren vorteilhaften Ausgestaltung der Erfindung ist der Halteteller während der Bearbeitung der Aufzeichnungsplatte um die Tellerachse drehbar.

Diese Maßnahme hat den Vorteil, daß ein Halteteller samt aufgenommener Aufzeichnungsplatte einer Bedienungsperson, die seitlich der Vorrichtung steht, die Aufzeichnungsplatte nach und nach in eine günstige Arbeitsposition bringt. Die Überlagerung der Drehbewegung des Haltetellers und der radial gerichteten Arbeitsrichtung der Schleifvorrichtung resultiert dennoch in einer die Informationsspur schneidenden Arbeitsrichtung.

Weitere Vorteile der Erfindung sind der nachfolgenden Beschreibung zu entnehmen.

Die Erfindung wird nachfolgend anhand eines ausgewählten Ausführungsbeispiels im Zusammenhang mit den beiliegenden Zeichnungen näher beschrieben und erläutert. Es zeigen:
- Fig. 1: eine Draufsicht auf die Leseseite einer digitalen Aufzeichnungsplatte in Form einer Compact Disc, die oberflächliche Beschädigungen aufweist,
- Fig. 2: einen Schnitt der Platte längs der Linie II-II von Fig. 1 nach einem erfindungsgemäßen Reparaturvorgang,
- Fig. 3: eine stark schematisierte perspektivische Ansicht einer erfindungsgemäßen Vorrichtung zum Reinigen von Aufzeichnungsplatten, und
- Fig. 4: eine ausschnittsweise stark vergrößerte Ansicht einer Aufzeichnungsplatte nach verschiedenen erfindungsgemäßen Reparaturbearbeitungsvorgängen.

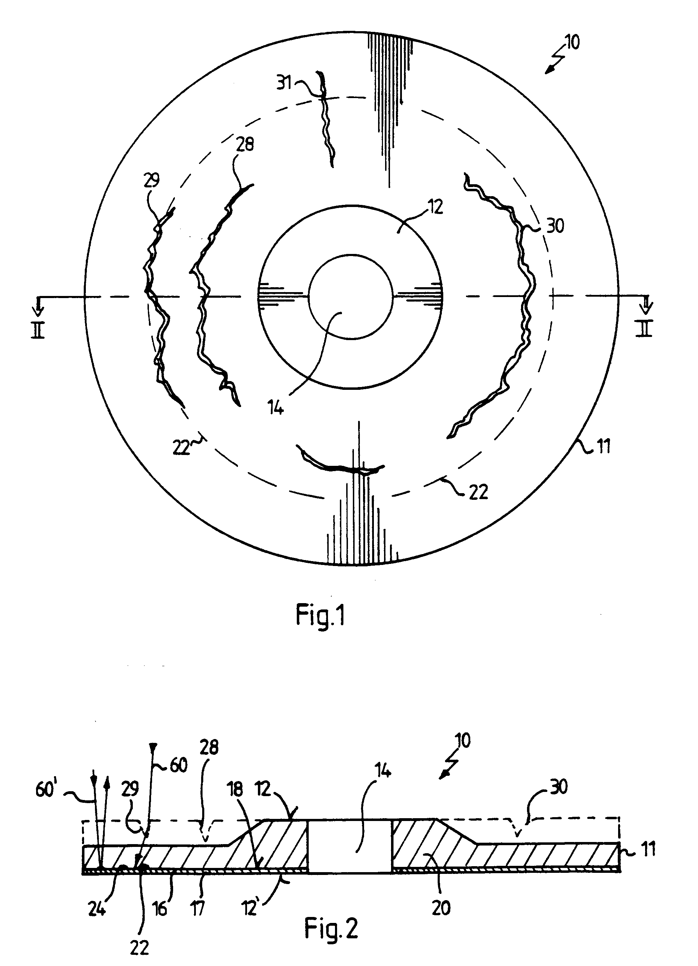

Eine in Fig. 1 bis 4 gezeigte digitale Aufzeichnungsplatte 10 in Form einer Compact Disc zur Tonaufzeichnung besteht im wesentlichen aus einer Kunststoffträgerschicht mit ca. 12 cm Durchmesser und einer Stärke von etwa 1,2 mm. Der Schnitt von Fig. 2 ist aus Gründen der Übersichtlichkeit wesentlich überhöht dargestellt.

Die Platte 10 weist eine mittige Öffnung 14 auf, die zur Aufnahme von Zentriervorrichtungen bzw. Zentrierstiften in einem Abspielgerät dient.

Um die Öffnung 14 ist beidseitig ein ringförmiger Auflagebereich 12, 12′ angeordnet, über den die Platte 10 mit Teilen des Abspielgeräts fest in Verbindung steht, um ein exaktes Führen und Antreiben der Platte zu ermöglichen.

Eine bodenseitige Informationsträgerschicht 16 trägt verschiedene Informationsspuren 22, die aus einzelnen Pits 24 aufgebaut ist.

In Fig. 1 ist eine Informationsspur 22 angedeutet, die bei einer Compact Disc zur Tonwiedergabe aus einer einzigen spiralförmigen Rille, die sich von außen nach innen windet, besteht.

Die Informationsschicht ist mit einer Metallisierungsschicht bedampft, die bodenseitig mit einer Schutzchicht 17 versehen ist, so daß sich eine glatte, ebene Oberfläche ergibt.

Auf der leseseitigen Fläche 18 der Informationsschicht 16, von der sich die Pits 24 buckelartig erheben, Schließt sich die etwa 1,2 mm starke Kunststoffträgerschicht 20 an, die über den gesamten Querschnitt ursprünglich die selbe Stärke aufweist.

Die in Fig. 1 dargestellte Platte 10 ist mit mehreren Beschädigungen in Form von in Umfangrichtung verlanfenden Kratzern 28, 29, 30 und einem radialen Kratzer 31 versehen.

Die in Fig. 1 dargestellten Beschädigungen sind derart gravierend, daß selbst bei Geräten mit einer extrem ausgefeilten Fehlerkorrektur die Compact Disc (CD) 10 nicht mehr abgespielt werden kann.

Wie aus dem Schnitt von Fig. 2 zu entnehmen, reichen die Kratzer 28, 29, 30 etwa über die Hälfte der Dicke der Kunststoffträgerschicht 20.

Ein Lesestrahl 60, der in eine seitliche Kraterfläche, beispielsweise des Kratzers 29, eintreffen würde, könnte so weit abgelenkt werden, daß er die darunterliegende Informationsspur 22 nicht mehr erreicht.

Daher wird die Trägerschicht 20 der Platte 10 im Abschnitt zwischen Auflagebereich 12 und Umfangskante 11 so weit abgetragen, bis die Kratzer 28, 29, 30 bzw. 31 völlig verschwunden sind.

Nach einem solchen Abtrag resultiert eine Platte 10, wie sie in Fig. 2 dargestellt ist. Der Auflagebereich 12, 12′ ist dabei in unveränderter Stärke enthalten, so daß auch die "abgeschliffene" Platte fest und sicher in den Halteorganen der Abspielgeräte aufgenommen werden kann.

Sind die Kratzer 28, 29, 30 und 31 nicht so tief wie in Fig. 2 dargestellt, sondern lediglich bis etwa 0,2 mm tief, so kann die Platte 10 gesamtflächig, d.h. also auch im Auflagebereich 12 beispielsweise mit einem Bandschleifer abgeschliffen werden. Ein Materialabtrag bis ca. 0,2 mm wird von den Toleranzen der Abspielvorrichtungen ausgeglichen. Der Bandschleifer weist dabei eine solche Breite auf, daß sichergestellt ist, daß die Informationsspur 22 geschnitten wird.

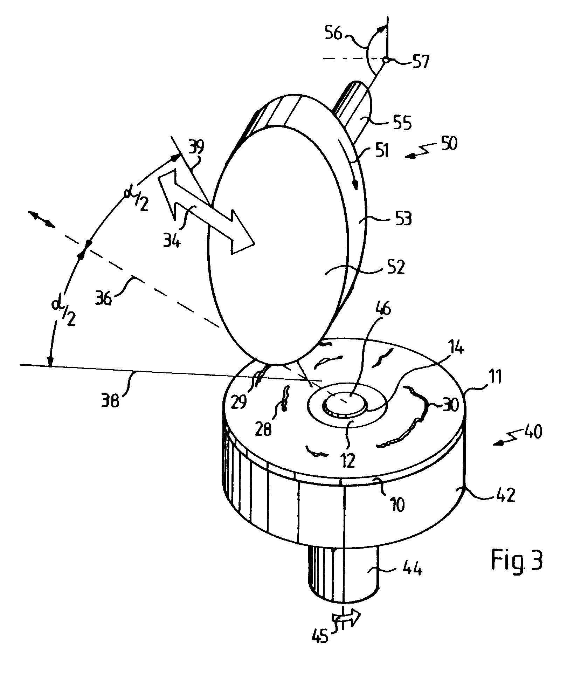

Das Verfahren bzw. die Vorrichtung zum Erreichen eines in Fig. 2 dargestellten Abtrages ist in Fig. 3 dargestellt.

Die Platte 10 ist auf einer Haltevorrichtung 40 aufgenommen, die einen Halteteller 42 aufweist, dessen Tellerfläche etwa horizontal verläuft.

Der Halteteller 42 weist einen Durchmesser auf, der in etwa dem Durchmesser der Platte 10 entspricht. Die Platte 10 ist dabei derart auf den Halteteller 42 gelegt, daß die mit den Beschädigungen versehene Seite der Platte 10 nach oben weist.

Die Platte 10 ist auf einen Dorn 46 des Haltetellers 42 aufgeschoben, der aus einem elastischen Material besteht und leicht konisch ausgebildet ist, so daß die Platte 10 durch Aufdrücken fest auf dem Dorn 46 sitzt.

Bodenseitig ist der Halteteller 42 mit einem Zapfen 44 versehen, der entweder als Handgriff ausgebildet sein kann oder in einem hier nicht näher dargestellten Haltefuß eingeschoben werden kann. Die Haltevorrichtung 40 ist in diesem Fall mit einer hier nicht näher dargestellten Arretiervorrichtung versehen, so daß ein eingeschobener Zapfen 44 in der Haltevorrichtung frei drehbar ist, wie dies durch einen Pfeil 45 angezeigt ist, jedoch in jeder winkelverdrehten Stellung festgestellt werden kann.

Es ist auch bei manchen Ausführungen vorgesehen, den Halteteller 42 während eines Bearbeitungsvorganges drehend anzutreiben.

Eine Schleifvorrichtung 50 weist einen Schleifteller 52 auf, der über einen Zapfen 55 mit einem hier nicht näher dargestellten Antrieb verbunden ist, der für ein Rotieren des Tellers, beispielsweise in Richtung des Pfeiles 51 bzw. auch ggf. in entgegengesetzter Richtung, sorgt.

Der Zapfen 55 kann so ausgebildet sein, daß er in einen Bohrkopf einer gebräuchlichen Bohrmaschine aufgenommen werden kann, die dann als Antrieb für den Schleifteller 52 dient.

Der Schleifteller 52 kann, wie dies in Fig. 3 angedeutet ist, auch um eine Achse 57 schwenkbar angeordnet sein, so daß der Schleifteller 52 aus seiner in Fig. 3 dargestellten Stellung, in der er über seine Mantelfläche 53 auf der Oberfläche der auf dem Halteteller 42 aufgelegten Platte 10 liegt, nach oben weggeschwenkt werden, wie dies durch einen Pfeil 56 angezeigt ist, damit bei einer ortsfesten Ausgestaltung der Haltevorrichtung die Platte 10 vom Halteteller 42 abgenommen werden kann.

Die Tellerfläche des Schleiftellers 52 verläuft senkrecht zur Fläche des Haltetellers 42 und wird beim Arbeitsvorgang, wie dies durch den Doppelpfeil 34 angedeutet ist, so hin- und herbewegt, daß sich die Tellerfläche parallel und längs eines Radius 36 des Haltetellers 42 bewegt.

Im in Fig. 3 dargestellten Ausführungsbeispiel hat sich der Schleifteller 52 von der äußeren Umfangskante des Auflagebereichs 12 längs des Radius 36 eine gewisse Strecke Richtung äußerer Umfangskante 11 der Platte 10 bewegt. Die rotierende Mantelfläche 53 bewegt sich dabei ebenfalls in dieser Arbeitsrichtung.

Teile des Kratzers 28 wurden bereits über die Breite der Mantelfläche 53 beseitigt. Um die verbleibenden Reste des Kratzers 28 bearbeiten zu können, wird der Schleifteller wieder längs eines Radius auf Richtung Mittelpunkt bzw. Dorn zurückbewegt, der Halteteller 42 so in Richtung des Pfeiles 45 verdreht, daß die Mantelfläche 53 des Schleiftellers 52 nach und nach die verbleibenden Kratzerbereiche bearbeitet.

Die Kontrolle des Materialabtrages kann bei einem ersten groben Arbeitsvorgang noch mit dem bloßen Auge erfolgen, die bei nachfolgenden Bearbeitungsgängen, beispielsweise durch eine Lupe, unterstützt werden kann.

Sind die Kratzer derart gravierend, wie dies in Fig. 1 und 2 dargestellt ist, so wird zunächst mit einem relativ grobkörnigen Schleifmittel vorgegangen, um einen hohen Materialabtrag zu erreichen. Nach und nach wird ein immer feinkörnigeres Material verwendet, um eine möglichst glatte Oberfläche zu erhalten. Zur Feinbearbeitung wird ein mit einem Poliertuch bespannter Schleifteller 52 verwendet, das aus einem fusselfreien Gewebe, beispielsweise aus 100 %iger Baumwolle besteht. Als Poliermittel wird ein feinkörniges Abrasiva verwendet, das in Pastenform im Handel ist. Die Umfangsgeschwindigkeit des Schleiftellers 52 beträgt bis zu 5 m pro Sekunde. Ein Arbeitsvorgang, d.h. ein Überstreichen einer zu bearbeitenden Fläche längs der Arbeitsrichtung 34 sollte 3 Sekunden nicht überschreiten. Dadurch wird eine Erwärmung der aus Kunststoff bestehenden Schutzschicht 20 bis in den Bereich der Erweichungstemperaturen des Materials vermieden.

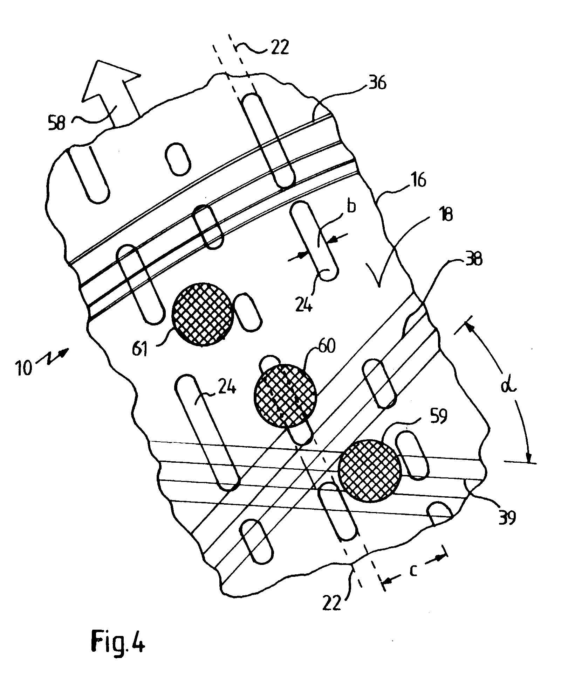

Bei der zuvor beschriebenen Bearbeitungsweise längs radialer Richtungen 34, 36 entsteht ein Schliffbild, wie es in Fig. 4 am oberen Abschnitt dargestellt ist.

Die durch das erfindungsgemäße Reparaturverfahren entstandene Polierstreifen verlaufen längs von Radien 36, d.h. sie schneiden die spiralförmig verlaufende Informationsspur 22 bzw. die darauf angeordneten Pits 24.

Die Breite b eines Pits 24 beträgt etwa 0,6 µm, der Abstand c zwischen zwei Informationsbahnen etwa 1,6 µm.

Die Körnung des Poliermittels bei der Endbearbeitung der Platte 10 bzw. der Anpreßdruck des Schleiftellers 52 wird so gewählt, daß ein Oberflächenschliffbild entsteht, das einen Lesevorgang durch beispielsweise 3 Strahlen 59, 60, 61 nicht beeinflußt. Der eigentliche Lesestrahl 60, der über die Pits 24 einer Informationsspur läuft, wird durch zwei Führungsstrahlen geführt, wobei der Strahl 59 bei Drehung der Scheibe 10 in Richtung eines Pfeiles 58 dem Lesestrahl 60 vorläuft und derart seitlich zu diesem verläuft, daß er zwischen zwei Informationsspuren 22 läuft. Entsprechend ist der zweite Strahl 61 nachlaufend und in die entgegengesetzte Richtung seitlich versetzt, er läuft daher auch zwischen zwei Informationsspuren.

Die durch die Bearbeitung längs der Radien 36 entstandenen Spuren beeinflussen die drei hintereinander laufenden Strahlen 59, 61 nicht derart, daß diese die "Orientierung" verlieren, und in eine andere Informationsspur abgelenkt werden. Dies kann so kontrolliert werden, daß die Platte nach einer Feinpolitur in ein Abspielgerät oder auch in einen "Quality Control Player" beispielsweise der Firma Revox eingelegt und auf Störgeräusche untersucht wird. Beim Feinpolieren mit einem Abrasiva (z.B. UBA 0197 0073) und einem Baumwolltuch aus 100%iger fusselfreier Baumwolle konnten auf einem Revox Quality Control Player Werte von 20 - 30 ermittelt werden, die etwa Werten von fabrikneuen, fehlerlosen Platten im Bereich von 10 - 20 entsprechen.

Gängige Geräte können Störungen bis zu einem Grenzwert von 200 unterdrücken.

Es werden also Werte erreicht, die weit unter der Toleranzgrenze liegen, so daß auch geringfügige erneute Beschädigungen einer reparierten Platte bis zu einer gewissen Größe kompensiert werden können.

In Fig. 3 ist durch Sekantenlinien 38, 39 eine weitere Bearbeitungsvariante angedeutet, d.h., der Schleifteller 52 wird dabei einmal längs einer Sekante 38 und anschließend bei einem nächsten Bearbeitungsvorgang längs einer Sekante 39 bewegt. Die Sekanten 38, 39 schließen einen Winkel α von etwa 45° ein.

Bei einem derartigen Bearbeitungsvorgang entsteht ein, wie in Fig. 4 auf der unteren Hälfte dargestelltes Schliffbild, ein sogenannter Kreuzschliff, der ebenfalls nur zu einer unwesentlichen Beeinflussung der Pits 24 der Informationsspur führt, vorausgesetzt selbstverständlich, daß ein entsprechend feinkörniges Material verwendet wird, wobei gleichzeitig durch die überkreuzenden Schlifflinien eine besonders gleichmäßige und ebene Fläche der bearbeiteten Platte 10 entsteht.

## Patentansprüche

1. Verfahren zum Reparieren von beschädigten transparenten kunstoffträgerschichten(20) digitaler Aufzeichnungsplatten (10), wie Schall- oder Bildaufzeichnungsplatten, die einen mittigen Auflagebereich (12) zum Halten und Führen der Platte (10) und eine Informationsträgerschicht (16) mit zumindestens einer Informationsspur (22) aufweisen, dadurch gekennzeichnet, daß die Trägerschicht (20) in einer die Informationsspur (22) schneidenden Arbeitsrichtung (34, 36, 38, 39) so weit abgetragen wird, bis keine Störungen beim Ablesevorgang mehr auftreten.

2. Verfahren nach Anspruch 1, dadurch gekennzeichnet, daß die Trägerschicht (20) zwischen Auflagebereich (12) und Plattenumfangskante (11) abgetragen wird.

3. Verfahren nach Anspruch 1 oder 2, dadurch gekennzeichnet, daß bei spiralförmiger oder kreisförmigen Informationsspur(en) (22) in radialer Richtung (34, 36) der Platte (10) abgetragen wird.

4. Verfahren nach Anspruch 1 oder 2, dadurch gekennzeichnet, daß die Arbeitsrichtung (38, 39) längs gegeneinander winkelversetzter Sekanten (38, 39) der Platte (10) verläuft, die vorzugsweise unter einem Winkel ( α ) von 45° zueinander verlaufen.

5. Verfahren nach einem der Ansprüche 1 bis 4, dadurch gekennzeichnet, daß das Abtragen durch mehrere Schleifvorgänge mit immer feinkörnigerem Schleifmittel durchgeführt wird, und zwar derart, daß abschließend etwa eine Oberflächengüte einer neuen Platte erreicht wird.

6. Verfahren nach einem der Ansprüche 1 bis 5, dadurch gekennzeichnet, daß eine flüssigkeitshaltige, vorzugsweise wasserhaltige Schleifpaste eingesetzt wird.

7. Verfahren nach einem der Ansprüche 1 bis 6, dadurch gekennzeichnet, daß beim Abtragen des Kunststoffs solche Arbeitsbedingungen eingehalten werden, daß die Temperatur der Platte (10) unterhalb der Erweichungstemperatur des abgehagenen Materials gehalten wird.

8. Vorrichtung zum Reparieren von beschädigten transparenten Kunststoffträgerschichten (20) digitaler Aufzeichnungsplatten (10), wie Schall - oder Bildaufzeichnungsplatten, die einen mittigen Auflagebereich (12) zum Halten und Führen der Platte (10) und eine Informationsträgerschicht (16) mit zumindestens einer Informationsspur (22) aufweisen, mit einer Haltevorrichtung (40) zur Aufnahme und zum Halten der zu reparierenden Platte und einer Schleifvorrichtung (50), die auf die zu bearbeitende Trägerschicht (20) aufbringbar und in einer die Informationsspur (22) schneidenden Arbeitsrichtung (34, 38, 39) hin- und herbewegbar ist.

9. Vorrichtung nach Anspruch 8, dadurch gekennzeichnet, daß die Haltevorrichtung (40) einen Halteteller (42) aufweist, dessen Durchmesser gleich oder geringfügig kleiner als der der Platte (10) ist.

10. Vorrichtung nach Anspruch 9, dadurch gekennzeichnet, daß der Halteteller (42) einen von der Tellerfläche abstehenden Spanndorn (46) aufweist, auf den eine eine mittige Öffnung (14) aufweisende Platte (10) im Paßsitz aufschiebbar ist.

11. Vorrichtung nach Anspruch 8, 9 oder 10, dadurch gekennzeichnet, daß der Halteteller (42) um die Tellerachse (44) drehbar und in jeder Winkelstellung arretierbar ist.

12. Vorrichtung nach Anspruch 9 oder einem der folgenden, dadurch gekennzeichnet, daß der Halteteller (42) mit einem fusselfreien Tuch, vorzugsweise aus reiner Baumwolle, überzogen ist.

13. Vorrichtung nach Anspruch 8 oder einem der folgenden, dadurch gekennzeichnet, daß die Schleifvorrichtung (50) einen rotierend angetriebenen Schleifteller (52) aufweist, der senkrecht zum Halteteller (42) steht und dessen Mantelfläche (53) als Schlciffläche ausgebildet ist.

14. Vorrichtung nach Anspruch 13, dadurch gekennzeichnet, daß der Schleifteller (52) mit einem fusselfreien Poliertuch, vorzugsweise aus reiner Baumwolle, überzogen ist.

15. Vorrichtung nach einem der Ansprüche 8 bis 12, dadurch gekennzeichnet, daß die Schleifvorrichtung als Bandschleifer ausgebildet ist.

16. Vorrichtung nach Anspruch 9 oder 10, dadurch gekennzeichnet, daß der Halteteller (42) während der Bearbeitung der Aufzeichnungsplatte (10) um die Tellerachse (44) drehbar ist.

## Claims

1. Method for repairing damaged transparent synthetic supporting layers (20) of digital recording disks (10) such as audio or video disks, having a central bearing area (12) for holding and guiding said disk (10) and a data medium layer (16) having at least one data track (22) thereon, characterized by removing said supporting layer (20) to a level at which disturbances do not appear during a reading operation, said removing is carried out in a working direction (34, 36, 38, 39) cutting across the data track (22).

2. Method according to claim 1, characterized in that said supporting layer (20) is removed between said central bearing area (12) and a circumferential edge (11) of said disk.

3. Method according to claims 1 or 2, characterized in that in case of spiral or circular data track(s) (22) said removing is carried out in radial direction (34, 36) of said disk (10).

4. Method according to claims 1 or 2, characterized in that said working direction (38, 39) runs along secants (38, 39) of said disk (10), said secants are set one to another, preferably at an angle (α) of 45°.

5. Method according to anyone of claims 1 through 4, characterized in that said removing is carried out by several successive grinding steps, thereby using step after step a more finer grained abrasive in such a way finally achieving a surface quality of a new manufactured disk.

6. Method according to anyone of claims 1 through 5, characterized in that a liquid containing, preferably a water containing grinding paste is used.

7. Method according to anyone of claims 1 through 6, characterized in that said removing of said synthetic is carried out in such a way maintaining the temperature of said disk (10) below the softening temperature of the removed material.

8. Device for repairing damaged transparent synthetic supporting layers (20) of digital recording disks (10), such as audio or video disks having a central bearing area (12) for holding and guiding said disk (10), and a data medium layer (16) having at least one data track (22) thereon, comprising holding means (40) for receiving and holding said disk to be repaired, and grinding means (50) disposeable onto the supporting layer (20) to be treated, and said grinding means is movable forwards and backwards in a working direction (34, 38, 39) cutting across the data track (22).

9. Device according to claim 8, characterized in that said holding means (40) is provided with a supporting plate (42) having a diameter being equal or slightly smaller than the diameter of said disk (10).

10. Device according to claim 9, characterized in that said supporting plate (42) is provided with an arbor (46) projecting from a surface of said plate, onto which arbor a disk (10) having a central aperture (14) can be slipped-on fittingly.

11. Device according to claims 8, 9 or 10, characterized in that said supporting plate (42) is pivotable about the plate axis (44) and is lockable at any angle position.

12. Device according to claim 9 or one of the following claims, characterized in that said supporting plate (42) is covered with a fluff-free cloth, preferably made of pure cotton.

13. Device according to claim 8 or one of the following claims, characterized in that said grinding means (50) comprises a grinding plate (52) being driven rotatably, said grinding plate (52) being disposed perpendicularly to the supporting plate (42), and its lateral face (53) is designed as a grinding face.

14. Device according to claim 13, characterized in that said grinding plate (52) is covered with a fluff-free polishing cloth, preferably made of pure cotton.

15. Device according to anyone of claims 8 through 12, characterized in that the grinding means is designed as a belt grinder.

16. Device according to claims 9 or 10, characterized in that the supporting plate (42) can be turned about the plate axis (44) during the treatment of the recording disk (10).

## Revendications

1. Procédé pour réparer des disques à enregistrement numérique à couches de support en matière synthétique transparentes (10), tels que les disques à enregistrement audio ou visuels, ceux-ci doivent être conçus avec une surface d'appui centrale (12) pour tenir et guider le disque (10) et une couche de support de données (16) avec au moins un sillon de données (22) caractérisé par le fait que la couche de support (20) va être enlevée dans un sens (34, 36, 38, 39) coupant le sillon de données (22) jusqu'à ce que les endommagements aient disparus lors de l'opération de lecture.

2. Procédé selon la revendication 1 est caractérisé par le fait que la couche de support (20) est poncée entre la surface d'appui (12) et l'arête extérieure du disque (11).

3. Procédé selon les revendications 1 ou 2 est caractérisé par le fait que si le sillon de données (22) est en forme de spirale ou de cercles, le disque (10) va être poncé dans le sens du rayon (34, 36).

4. Procédé selon les revendications 1 ou 2 est caractérisé par le fait que le sens du travail de ponçage (38, 39) s'effectue le long de sécantes (38, 39) du disque se croisant en format de préférence un angle alpha à 45°.

5. Procédé selon l'une des revendications 1 à 4 est caractérisé par le fait que le travail de ponçage s'effectue en plusieurs étapes avec du matériel de ponçage aux grains de plus en plus fin et de façon à obtenir finalement la qualité de structure d'un disque neuf.

6. Procédé selon les revendications 1 à 5 est caractérisé par le fait qu'on utilise une pâte à polir fluide, contenant de préférence de l'eau.

7. Procédé selon l'une des revendications 1 à 6 est caractérisé par le fait que lors du travail de ponçage de la matière synthétique, il faut respecter les conditions de ponçage qui font que la température du disque (10) est maintenue en dessous de la température de ramollissement de la matière enlevée.

8. Appareil pour réparer des disques à enregistrement numérique à couches de support en matière synthétique transparentes (10), tels que les disques à enregistrement audio ou visuels, ceux-ci doivent être conçu avec une surface d'appui centrale (12) pour tenir et guider le disque (10) et une couche de support de données (16) avec au moins un sillon de données (22), cet appareil est doté d'un dispositif de maintien (40) pour saisir et tenir le disque à réparer et d'un dispositif de ponçage (50) qu'on peut appliquer sur la couche de support (20) à réparer et qu'on peut déplacer dans un mouvement de va et vient (34, 38, 39) dans un sens coupant le sillon de données (22).

9. L'appareil selon la revendication 8 est caractérisé par le fait que le dispositif de maintien (40) est équipé d'un disque de maintien (42) dont le diamètre est egal ou légèrement inférieur à celui du disque (10).

10. L'appareil selon la revendication 9 est caractérisé par le fait que le disque de maintien (42) est pourvu d'un cône (46) sur lequel on peut emboiter un disque (10) doté d'une ouverture centrale (14) en appuyant dessus.

11. L'appareil selon les revendications 8, 9 ou 10 est caractérisé par le fait que le disque de maintien (42) peut pivoter autour du tenon (44) , et on peut l'arrêter dans n'importe quelle position.

12. L'appareil selon la revendication 9 ou une des revendications suivante est caractérisé par le fait que le disque de maintien (42) est recouvert d'un tissu antistatique de préférence en pur coton.

13. L'appareil selon la revendication 8 ou une des revendications suivantes est caractérisé par le fait que le dispositif de ponçage (50) est équipé d'un disque à poncer (52) à moteur rotatif qui est perpendiculaire au disque de maintien (42) et dont la surface latérale (53) constitue la surface de ponçage.

14. L'appareil selon la revendication 13 est caractérisé par le fait que le disque à poncer (52) est recouvert d'une toile à polir antistatique et de préférence en pur coton.

15. L'appareil selon les revendications 8 à 12 est caractérisé par le fait que le dispositif de ponçage se présente sous forme de bande de ponçage.

16. L'appareil selon la revendications 9 ou 10 est caractérisé par le fait que le disque de maintien (42) pivote autour l'axe du disque (44) lors du travail de ponçage du disque d'enregistrement (10).
